# EUROPÄISCHE PATENTSCHRIFT

(11) **EP 2 133 231 B1**
(45) Veröffentlichungstag und Bekanntmachung des Hinweises auf die Patenterteilung: **26.09.2012**
(21) Anmeldenummer: 09162318.1
(22) Anmeldetag: 09.06.2009
(51) Int. Cl.: B60K 5/12

(54) **Vorrichtung zum Befestigen eines Motors an einem Rahmen eines landwirtschaftlichen oder industriellen Nutzfahrzeugs**
Device to fix a motor to a frame on an agricultural or industrial utility vehicle
Dispositif de fixation d'un moteur sur un cadre d'un véhicule utilitaire agricole ou industriel

(30) Priorität: 11.06.2008 DE 102008002350
(43) Veröffentlichungstag der Anmeldung: 16.12.2009
(73) Patentinhaber: Deere & Company, Moline, IL 61265-8098 (US)
(72) Erfinder: Fell, Thomas, 97789, Oberleichtersbach (DE)
(74) Vertreter: Dehnhardt, Florian Christopher

(56) Entgegenhaltungen:
- DE-A1-102006 019 264
- DE-B- 1 138 328
- DE-C1- 10 148 312
- US-A- 2 205 999

## Beschreibung

Die Erfindung betrifft ein landwirtschaftliches oder industrielles Nutzfahrzeug mit einem Rahmen, einem Motor, und einer Vorrichtung zum Befestigen des Motors an dem Rahmen, wobei der Rahmen zwei voneinander beabstandet angeordnete Rahmenelemente aufweist, an denen weitere Komponenten des Nutzfahrzeugs anbaubar sind, beispielsweise ein Getriebe und/oder eine Fahrzeugachse.

Motoraufhängungen bzw. Motorbefestigungen der eingangs genannten Art sind aus dem Stand der Technik seit langem bekannt. So ist es üblich, einen Motor schwingungsisoliert oder fest bzw. starr auf ein tragendes Fahrwerk bzw. Chassis des Fahrzeugs zu montieren. Ein solches Fahrwerk besteht meist aus einer linken und einer rechten Rahmenhälfte, welche durch mehrere Verbindungselemente miteinander verbunden sind. Die Rahmenkonstruktion stellt somit ein biege- und torsionssteifes Fahrwerk dar. Wenn der Motor schwingungsisoliert an dem Rahmen montiert ist, werden in den Motor in der Regel keine äußeren Kräfte eingeleitet.

Ein industrielles Nutzfahrzeug in Gestalt eines Lastkraftwagens in Rahmenbauweise geht beispielsweise aus der US 2 205 999 A hervor, bei dem an einem Hauptrahmen zwei sich in Längsrichtung des Nutzfahrzeugs erstreckende Rahmenelemente angebracht sind, zwischen denen eine aus einem Verbrennungsmotor sowie einem Generator bestehende Stromerzeugungseinheit mittels zugehöriger Befestigungsvorrichtungen gelagert ist.

Alternativ ist eine sogenannte Blockbauweise bekannt, welche üblicherweise bei leistungsstarken Traktoren zum Einsatz kommt. Hierbei wird der Motor als tragendes Element zwischen einer Vorderachse oder einem Vorderachstragbock und einem Getriebe bzw. Getrieberahmen montiert. Bei einer solchen Anordnung ist der Motor fest in das Fahrwerk integriert. Daher werden beim Fahrbetrieb äußere Kräfte in den Motor eingeleitet, welche insbesondere dann besonders hoch sind, wenn das Fahrzeug im Gelände bewegt wird und/oder eine Arbeitsfunktion ausführt. Insbesondere wenn mit einem an dem Traktor angekoppelten Pflug ein Feld gepflügt wird, ist der Traktor hohen äußeren Kräften ausgesetzt, welche auch in den Motor bzw. in das Motorgehäuse eingeleitet werden.

Der vorliegenden Erfindung liegt daher die Aufgabe zugrunde, ein landwirtschaftliches oder industrielles Nutzfahrzeug der eingangs genannten Art anzugeben und weiterzubilden, durch welche die vorgenannten Probleme überwunden werden. Insbesondere soll vermieden werden, dass äußere Kräfte in den Motor bzw. in das Motorgehäuse eingeleitet werden.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein landwirtschaftliches oder industrielles Nutzfahrzeug der eingangs genannten Art dadurch gekennzeichnet, dass mindestens ein äußerer Bereich des Motorgehäuses, insbesondere ein Bereich einer Seitenfläche derart ausgebildet ist, dass eine Befestigungsstruktur des Motors gebildet wird und dass der Motor mit lediglich dieser Befestigungsstruktur an den beiden Rahmenelementen befestigbar ist.

Grundsätzlich ist es auch denkbar, dass mindestens zwei Seiten des Motorgehäuses derart ausgebildet sind, dass jeweils eine Befestigungsstruktur des Motors gebildet wird und dass das Motorgehäuse mit lediglich diesen Befestigungsstrukturen an den beiden Rahmenelementen befestigbar ist. Auch kann in einem mittleren Bereich des Motors ein im Wesentlichen ringförmig ausgebildeter Flanschbereich vorgesehen sein, mit welchem der Motor an den beiden Rahmenelementen befestigbar ist. Der ringförmig ausgebildete Flanschbereich kann konzentrisch zur Fahrzeug- bzw. zur Motorlängsachse oder in einer Ebene angeordnet sein, welche senkrecht zur Längsachse der Kurbelwelle angeordnet ist.

Mit anderen Worten wird der Motor freitragend, aber im Wesentlichen starr mit den beiden Rahmenelementen verbunden. Diese Verbindung dient unter anderem dazu, die Gewichtskraft des Motors und das von dem Motor erzeugte mechanische Drehmoment gegenüber dem Rahmen abzustützen. Eine solche Befestigung kann mittels einer Kragarmverbindung realisiert sein, wobei beispielsweise an dem Motorgehäuse schwungradseitig eine entsprechende Befestigungsstruktur vergleichbar einem Kragen oder einem Flansch ausgebildet ist. Mit einer solchen Befestigung des Motors an den beiden Rahmenelementen werden in vorteilhafter Weise keine äußeren, in erster Linie auf das Fahrwerk bzw. Chassis des Fahrzeugs wirkenden Kräfte und Lasten in den Motor bzw. Motorblock eingeleitet, welche zu einer entsprechenden Biege- und Torsionsbelastung führen können. Aufgrund der festen Verbindung zwischen dem Motor und den beiden Rahmenelementen wird weiterhin die Torsionssteifigkeit des Fahrwerks bzw. des Rahmens erhöht.

Gemäß einer bevorzugten Ausführungsform ist vorgesehen, dass die Seitenfläche des Motorgehäuses das schwungradseitige Ende des Motors oder das gegenüberliegende Ende des Motors ist. Mit anderen Worten ist die Seitenfläche des Motorgehäuses, an welchem die Befestigungsstruktur gebildet ist, dort, wo das Schwungrad vorgesehen ist. Alternativ kann die Befestigungsstruktur auch an der der Schwungradseite des Motors gegenüberliegenden Seite bzw. an dem entsprechenden Ende des Motors vorgesehen sein. Da in diesem Fall der Motor lediglich schwungradseitig (oder am gegenüberliegenden Ende des Motors) an den beiden Rahmenelementen befestigt ist, ist das jeweils andere Ende des Motors, welches nicht an den Rahmenelementen befestigt ist, freihängend. Daher ist die Befestigungsstruktur derart auszubilden, dass ein Kipp- bzw. Drehmoment des Motors abgestützt werden kann.

In einer alternativen Ausführungsform ist die Seitenfläche des Motorgehäuses im Wesentlichen senkrecht zur Längsachse der Kurbelwelle des Motors orientiert. Hierbei kann es sich um eine ringförmige Befestigungsstruktur der vorstehend erwähnten Art handeln, welche beispielsweise in einem mittleren Bereich des Motors vorgesehen ist. Insofern kann der Motor mittig bzw. ausbalanciert an den beiden Rahmenelementen befestigt werden.

Gemäß einer weiteren alternativen Ausführungsform ist die Seitenfläche des Motorgehäuses eine zur Längsachse der Kurbelwelle im Wesentlichen parallel angeordnete Ebene. Die Ebene ist vorzugsweise horizontal oder vertikal orientiert. Beispielsweise kann ein Bereich an der Unterseite des Motors vorgesehen sein, welcher sich seitlich zu den Rahmenelementen erstreckt. Dieser Bereich kann schwungradseitig, mittig oder der Schwungradseite des Motors gegenüberliegend angeordnet und/oder auf einen Bereich von bis zu ca. 20 % der Unterseite des Motors begrenzt sein. Mit dieser Befestigungsstruktur wird der Motor dann an den beiden Rahmenelementen befestigt.

Besonders bevorzugt weist die Befestigungsstruktur eine Gehäuseverstärkung auf, welche sich umfangsmäßig um das Motorgehäuse erstreckt. Die Gehäuseverstärkung kann am Schwungradgehäuse oder an einem Bereich des Motorgehäuses, an welchem das Schwungrad angeordnet ist, vorgesehen sein. Die Gehäuseverstärkung kann derart dimensioniert sein, dass zumindest die Gewichtskraft des Motors und das von ihm erzeugte Drehmoment sowie üblicherweise beim Betrieb des Fahrzeugs auftretende Beschleunigungskräfte, welche auf den Motor wirken, gegenüber den Rahmenelementen abgestützt bzw. abgetragen werden. Die Gehäuseverstärkung erstreckt sich dann insbesondere umfangsmäßig um das Motorgehäuse, wenn eine im Wesentlichen ringförmige oder rechteckförmige Gehäuseverstärkung im Sinne einer geschlossenen Struktur an der Außenseite des Motors vorgesehen ist.

Gemäß einer bevorzugten Ausführungsform ist die Befestigungsstruktur derart ausgebildet, dass mit den Rahmenelementen eine Kragarmverbindung gebildet wird. Alternativ oder zusätzlich ist der Motor mittels der Befestigungsstruktur freitragend an dem Rahmen aufgehängt.

Die Befestigungsstruktur kann mindestens ein Flanschteil aufweisen. Alternativ kann an der Befestigungsstruktur mindestens ein Flanschteil anbringbar sein. Das mindestens eine Flanschteil ist an einem Rahmenelement befestigbar. Mit anderen Worten kann einteilig mindestens ein Flanschteil vorgesehen sein, welches die Befestigungsstruktur des Motors bildet und mit welchem der Motor an den Rahmenelementen befestigbar ist. Dies kann beispielsweise an dem gegossenen Motorblock vorgesehen sein. Alternativ hierzu ist an der Befestigungsstruktur des Motors ein Flanschteil anbringbar, mit welchem der Motor an einem Rahmenelement befestigt wird.

Gemäß einer bevorzugten Ausführungsform ist der Motor mit der Befestigungsstruktur zwischen den beiden Rahmenelementen befestigbar. Eine solche räumliche Anordnung des Motors relativ zu den beiden Rahmenelementen ist z.B. im Falle der Traktoren der 6000er-Serie von John Deere bekannt. Dementsprechend erstrecken sich die beiden Rahmenelemente durchgehend von der Vorderachse bis zum Getriebe bzw. Differenzialgehäuse. Aufgrund der Befestigung des Motors zwischen den beiden Rahmenelementen wird der Rahmen des Nutzfahrzeugs zusätzlich versteift.

Ferner kann die Befestigungsstruktur derart an dem Rahmen des Nutzfahrzeugs befestigt sein, dass keine äußeren, auf den Rahmen des Nutzfahrzeugs wirkenden Kräfte, beispielsweise von einem an das Nutzfahrzeug anbringbaren Arbeitsgerät, in den Motor eingeleitet werden. Dies kann beispielsweise mithilfe der Kragarmaufhängung der vorstehend erwähnten Art realisiert sein.

Bevorzugt ist die Befestigungsstruktur derart ausgebildet, dass mit dieser das Eigengewicht des Motors sowie ein diesbezüglich gegebenenfalls wirkendes Kippmoment und/oder das vom Motor erzeugte mechanische Drehmoment gegenüber dem Rahmen abstützbar ist.

Bevorzugt weist ein Rahmenelement ein tragendes und ein im Wesentlichen länglich ausgebildetes Bauteil auf, welches bevorzugt parallel zur Fahrzeuglängsrichtung angeordnet ist. Ein solches Rahmenelement kommt in dem oben erwähnten Traktor der 6000er-Serie von John Deere zum Einsatz.

Die Befestigungsstruktur oder ein mit der Befestigungsstruktur starr verbundenes Flanschteil kann starr an einem Rahmenelement befestigt sein. Auf diese Weise ist der Motor starr mit den Rahmenelementen bzw. mit dem Rahmen des Fahrzeugs verbunden. Eventuelle Vibrationen bzw. Schwingungen des Motors übertragen sich gemäß dieser Ausführungsform unmittelbar auf den Rahmen des Fahrzeugs.

Alternativ ist gemäß einer bevorzugten Ausführungsform die Befestigungsstruktur derart ausgebildet, dass Vibrationen und/oder Schwingungen des Motors relativ zu den Rahmenelementen möglich und vorzugsweise dämpfbar sind. Dies kann durch schlitzförmige oder längliche Aussparungen in Flanschteilen oder in der Befestigungsstruktur realisiert werden.

In besonders vorteilhafter Weise kann die Anzahl der zum Befestigen des Motors erforderlichen Bauteile reduziert werden, wenn die Befestigungsstruktur integral in dem bzw. an dem Motorgehäuse ausgebildet ist. Der Motor ist sozusagen direkt an den Rahmenelementen mit der Befestigungsstruktur verbunden bzw. daran befestigt.

Es gibt nun verschiedene Möglichkeiten, die Lehre der vorliegenden Erfindung in vorteilhafter Weise auszugestalten und weiterzubilden. Dazu wird einerseits auf die Unteransprüche und andererseits auf die nachfolgende Erläuterung der bevorzugten Ausführungsbeispiele der Erfindung anhand der Zeichnungen verwiesen. In Verbindung mit der Erläuterung der bevorzugten Ausführungsbeispiele der Erfindung anhand der Zeichnungen werden auch im Allgemeinen bevorzugte Ausgestaltungen und Weiterbildungen der erfindungsgemäßen Lehre erläutert. Hierbei sind übereinstimmende oder bezüglich ihrer Funktion vergleichbare Bauteile mit denselben Bezugszeichen gekennzeichnet. Es zeigen:
- Fig. 1: in einer Aufsicht ein erstes Ausführungsbeispiel der vorliegenden Erfindung,
- Fig. 2: in einer Aufsicht ein zweites Ausführungsbeispiel der vorliegenden Erfindung,
- Fig. 3: in einer perspektivischen Ansicht ein weiteres, dem Ausführungsbeispiel gemäß Fig. 1 vergleichbares Ausführungsbeispiel der vorliegenden Erfindung,
- Fig. 4: in einer perspektivischen Ansicht das Ausführungsbeispiel aus Fig. 3, gesehen aus einer anderen Perspektive, und
- Fig. 5: in einer Seitenansicht ein weiteres Ausführungsbeispiel der vorliegenden Erfindung.

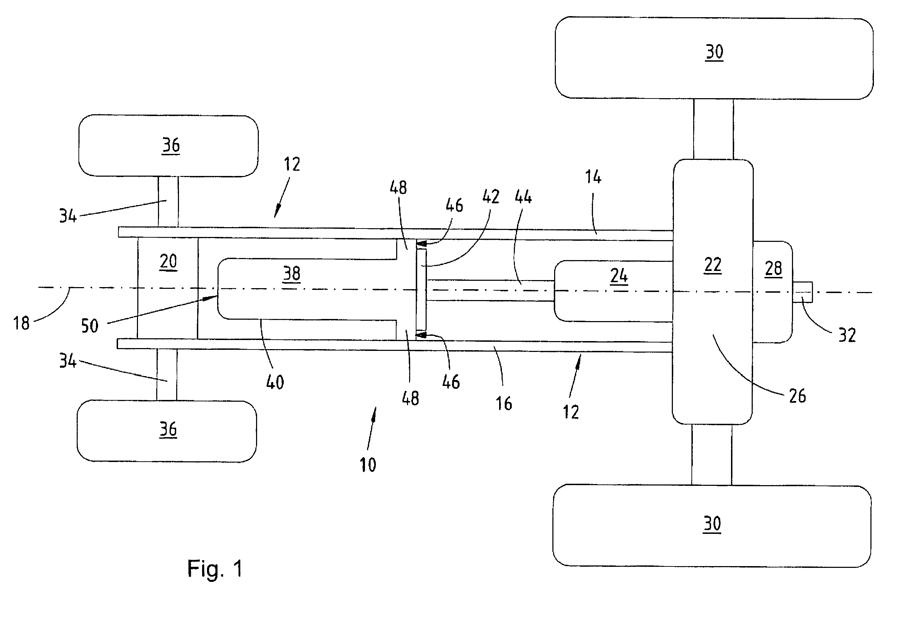

Fig. 1 zeigt in einer schematischen Aufsicht ein Fahrwerk 10 eines landwirtschaftlichen Nutzfahrzeugs, nämlich eines nicht dargestellten Traktors. Der Traktor ist in Rahmenbauweise realisiert. Der Rahmen 12 weist zwei voneinander beabstandet angeordnete Rahmenelemente 14, 16 auf, welche sich von einem vorderen Bereich des Traktors bis zu einem hinteren Bereich erstrecken. Die beiden Rahmenelemente 14, 16 sind im Wesentlichen parallel zur Fahrzeuglängsachse 18 angeordnet. In dem vorderen Bereich des Traktors ist ein Verbindungselement 20 vorgesehen, an welchem jeweils die beiden Rahmenelemente 14, 16 befestigt sind. In einem hinteren Bereich des Traktors sind die beiden Rahmenelemente 14, 16 an einem Getriebegehäuse 22 befestigt. Das Getriebegehäuse 22 ist in Fig. 1 lediglich schematisch eingezeichnet und umfasst einerseits ein Lastschaltgetriebe 24, ein Differenzialgetriebe 26 und ein Zapfwellengetriebe 28, wobei diese Getriebe nicht eingezeichnet sind und mit den Bezugszeichen lediglich angedeutet ist, wo in etwa diese Getriebe in dem aus mehreren Gehäuseteilen bestehenden Getriebegehäuse 22 lokalisiert sind. An dem Differenzialgetriebe 26 verlaufen seitlich über entsprechende Achsgetriebegehäuse jeweils nicht dargestellte Antriebswellen zu Hinterrädern 30 des Traktors, um diese anzutreiben. Mit dem Bezugszeichen 32 ist eine Zapfwelle gekennzeichnet, welche mit einem Zapfwellengetriebe 28 drehverbunden ist und mit welcher an den Traktor anbaubare, nicht dargestellte Arbeitsgeräte mechanisch angetrieben werden können.

An dem Verbindungselement 20 ist eine pendelnd gelagerte und lediglich schematisch angedeutete Vorderachse 34 des Traktors aufgehängt, an welcher Vorderräder 36 drehbar gelagert sind. An dem Rahmen 12 bzw. an den Rahmenelementen 14, 16 ist ein Motor 38 des Traktors befestigt, wobei der Motor 38 in Form eines Verbrennungsmotors ausgebildet ist. Der Motor 38 weist ein Motorgehäuse 40, ein Schwungrad 42 und eine Antriebswelle 44 auf. Die Antriebswelle 44 ist mit dem Lastschaltgetriebe 24 über eine nicht dargestellte Gelenkwelle verbunden.

Erfindungsgemäß ist mindestens ein Bereich einer Seitenfläche 46 des Motorgehäuses 40 derart ausgebildet, dass eine Befestigungsstruktur 48 des Motors 38 gebildet wird. In erfindungsgemäßer Weise ist der Motor 38 mit lediglich dieser Befestigungsstruktur 48 an den beiden Rahmenelementen 14, 16 befestigt. Insofern ist insbesondere ein vorderer Bereich 50 des Motors 38 mit keinem Befestigungsbauteil oder in sonst keiner Weise mit dem Rahmen 12 und/oder den Rahmenelementen 14, 16 verbunden, ist also freitragend am Rahmen befestigt.

In Fig. 1 ist die Seitenfläche 46 des Motorgehäuses 40 die Seite des Motors 38, an welcher das Schwungrad 42 angeordnet ist. Mit anderen Worten ist die Seitenfläche 46 des Motorgehäuses 40 die Seite des Motors 38, welche dem Getriebegehäuse 22 bzw. dem Lastschaltgetriebe 24 zugewandt ist.

In einem nicht dargestellten alternativen Ausführungsbeispiel kann die Befestigungsstruktur 48, welche in Fig. 1 schwungradseitig an dem Motorgehäuse 40 vorgesehen ist, an dem vorderen Bereich 50 des Motors 38 ausgebildet sein. Demgemäß ist der Motor 38 lediglich mit einer Befestigungsstruktur an dem vorderen Bereich 50 des Motors 38 an den beiden Rahmenelementen 14, 16 befestigt.

Die Seitenfläche 46 des Motorgehäuses 40 ist gemäß Fig. 1 im Wesentlichen senkrecht zur Längsachse der nicht dargestellten Kurbelwelle bzw. Antriebswelle 44 oder der Traktorlängsachse 18 orientiert.

Die Befestigungsstruktur 48 weist eine Gehäuseverstärkung auf, welche an dem Gehäuse des Schwungrads 42 des Motors 38 ausgebildet ist. Gemäß Fig. 1 ist die Befestigungsstruktur 48 integral bzw. einteilig mit dem Motorgehäuse 40 ausgebildet. Die Befestigungsstruktur 48 erstreckt sich umfangsmäßig um das Schwungrad 42 bzw. um das Motorgehäuse 40 im Bereich des Schwungrads 42. Dementsprechend ist die Befestigungsstruktur 48 derart ausgebildet, dass diese mit den Rahmenelementen 14, 16 eine Kragarmverbindung bildet. Der Motor 38 gemäß Fig. 1 ist mit Hilfe der Befestigungsstruktur 48 freitragend an dem Rahmen 12 bzw. an den Rahmenelementen 14, 16 aufgehängt.

Da der Motor 38 mit der Befestigungsstruktur 48 an den beiden Rahmenelementen 14, 16 befestigt ist, wird der Rahmen 12 des Traktors zusätzlich versteift. Der Rahmen 12 des Traktors umfasst insbesondere die Rahmenelemente 14, 16, das Verbindungselement 20 und den Teil des Getriebegehäuses 22, an welchem die Rahmenelemente 14, 16 befestigt sind.

In vorteilhafter Weise ist die Befestigung des Motors 38 an dem Rahmen 12 des Nutzfahrzeugs derart ausgebildet, dass keine äußeren Kräfte, welche auf den Rahmen 12 des Traktors wirken können, in den Motor 38 eingeleitet werden. Zwar ist der Motor 38 mit der Befestigungsstruktur 48 starr an den beiden Rahmenelementen 14, 16 befestigt. Falls jedoch der Rahmen 12 Biege- oder Torsionsbelastungen ausgesetzt ist und sich der Rahmen 12 in seiner dreidimensionalen Struktur verformt, werden diese nicht in den Motor 38 eingeleitet. Das Motorgehäuse 40 muss daher keine tragende Funktion für das Fahrzeug bereitstellen. Hierdurch können Kosten gespart werden, da das Motorgehäuse nicht die Stabilität aufweisen muss, die ansonsten für einen Motor in Blockbauweise erforderlich ist.

Die Befestigungsstruktur 48 ist derart ausgebildet, dass mit dieser das Eigengewicht des Motors 38 sowie das vom Motor 38 erzeugte Drehmoment am Rahmen 12 bzw. an den Rahmenelementen 14, 16 abgestützt wird. Auch ein aufgrund der Motoraufhängung wirkendes Kipp- bzw. Drehmoment des Motors 38, welches durch seine Gewichtskraft verursacht ist, wird von der Befestigungsstruktur 48 abgestützt. Auch eventuell auftretende, in vertikaler und/oder horizontaler Richtung wirkende Beschleunigungskräfte des Traktors, welche insbesondere bei schweren Feldarbeiten trotz eventuell vorgesehener Achsfederung auftreten können, werden von der Befestigungsstruktur 48 gegenüber dem Rahmen 12 abgestützt bzw. aufgefangen.

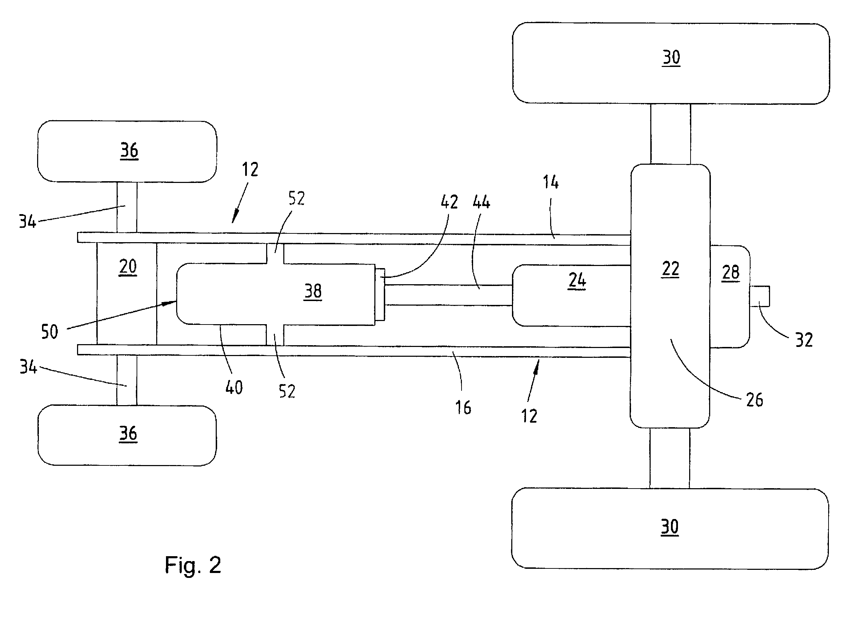

Fig. 2 zeigt in einer schematischen Aufsicht ein alternatives Ausführungsbeispiel, wobei jedoch der Rahmen 12 und die daran angebauten Komponenten vergleichbar zu dem Ausführungsbeispiel gemäß Fig. 1 ausgebildet sind. Gemäß diesem Ausführungsbeispiel ist jedoch keine Befestigungsstruktur an der Schwungradseite des Motorgehäuses 40 ausgebildet, sondern es ist in einem mittleren Bereich des Motorgehäuses 40 an den beiden, den Rahmenelementen 14, 16 zugewandten Seitenflächen des Motorgehäuses 40 jeweils eine Befestigungsstruktur 52 vorgesehen. Mit der einen Befestigungsstruktur 52 ist der Motor 38 an dem Rahmenelement 14 befestigt. Mit der anderen Befestigungsstruktur 52 ist der Motor an dem Rahmenelement 16 befestigt. Die beiden Befestigungsstrukturen 52 gemäß Fig. 2 erstrecken sich somit lediglich in einem mittleren Bereich der jeweiligen Seitenfläche des Motorgehäuses 40, welche dem jeweiligen Rahmenelement 14, 16 zugewandt ist. In der Aufsicht aus Fig. 2 ist nicht erkennbar, dass auf der Unterseite des Motors 38 eine Gehäuseverstärkung vorgesehen ist, so dass die Befestigungsstruktur 52 gemäß Fig. 2 im Wesentlichen u-förmig ausgebildet ist, also auf der dem Rahmenelement 14, 16 zugewandten Seitenfläche des Motorgehäuses 40 im Wesentlichen vertikal verläuft. Die beiden Befestigungsstrukturen 52 sind unterhalb des Motors 38 mit einer nicht dargestellten weiteren Gehäuseverstärkung verbunden.

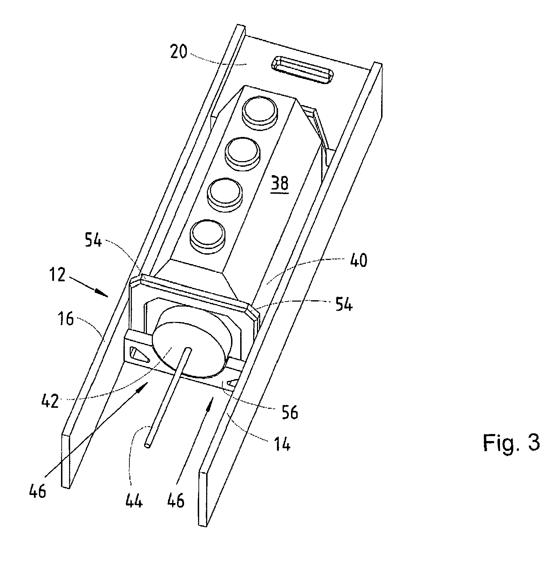

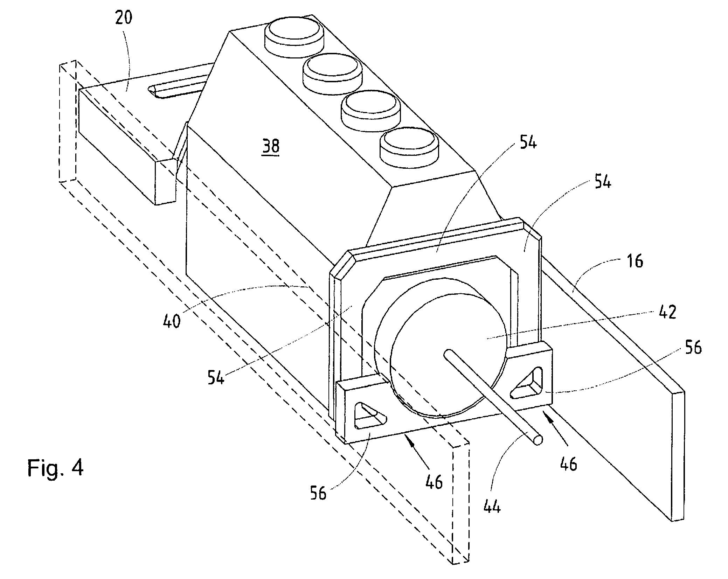

In Fig. 3 und 4 ist jeweils in einer perspektivischen Ansicht ein weiteres Ausführungsbeispiel der vorliegenden Erfindung gezeigt. Demgemäß ist lediglich der obere Teil bzw. Bereich des Motorgehäuses 40 in Form einer Befestigungsstruktur 54 ausgebildet. Die Befestigungsstruktur 54 ist im Bereich des Schwungrads 42 vorgesehen und in Form einer Gehäuseverstärkung ausgebildet. Mit der Befestigungsstruktur 54 ist das Motorgehäuse 40 bzw. der Motor 38 starr mit den beiden Rahmenelementen 14, 16 verbunden. In einem unteren Bereich der Seitenfläche 46 des Motors 38 weist das Motorgehäuse 40 ein nicht dargestelltes Flanschteil auf, welches ebenfalls in Form einer Gehäuseverstärkung ausgebildet ist. Zwischen den beiden Rahmenelementen 14, 16 erstreckt sich ein Verbindungselement 56, welches starr mit den Rahmenelementen 14, 16 verbunden ist. Das Flanschteil des Motorgehäuses 40 ist an dem Verbindungselement 56 angeflanscht bzw. daran befestigt. Insoweit ist das Flanschteil des Motorgehäuses 40 über das Verbindungselement 56 an den Rahmenelementen 14 bzw. 16 starr befestigt. In Fig. 4 ist aus Gründen der Übersichtlichkeit das Rahmenelement 14 gestrichelt eingezeichnet.

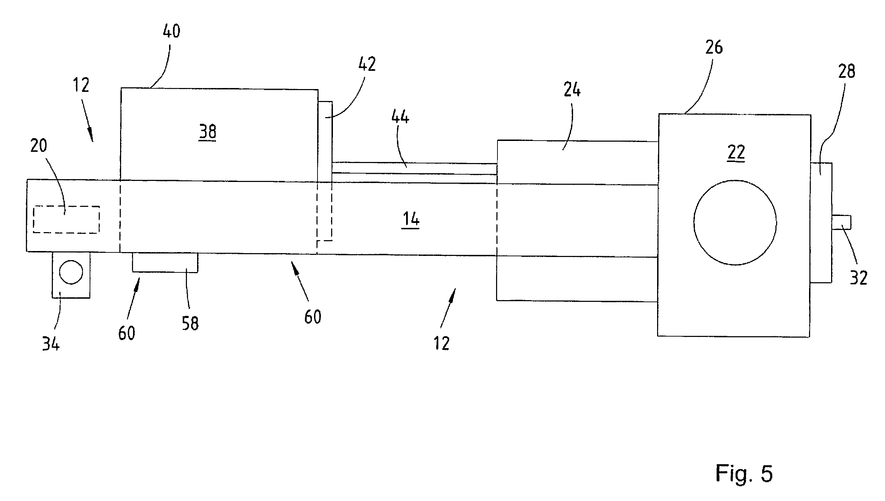

Fig. 5 zeigt in einer Seitenansicht ein weiteres Ausführungsbeispiel einer erfindungsgemäßen Vorrichtung zum Befestigen des Motors 38 an dem Rahmen 12. Auch hier sind beide voneinander beabstandet angeordnete Rahmenelemente 14, 16 sowie das Verbindungselement 20 und das Getriebegehäuse 22 vorgesehen, welche den Rahmen 12 des Traktors bilden. Der vordere Bereich der unteren Seitenfläche des Motorgehäuses 40 ist derart ausgebildet, dass eine Befestigungsstruktur 58 des Motors 38 gebildet ist. Der Motor 38 ist demgemäß lediglich mit dieser Befestigungsstruktur 58 an den beiden Rahmenelementen 14, 16 befestigt. Genauer gesagt ist die Ölwanne des Motors 38 bzw. des Motorgehäuses 40 mit einer Gehäuseverstärkung versehen, welche gleichzeitig als Befestigungsstruktur zum Befestigen des Motors an den Rahmenelementen 14, 16 dient. Dementsprechend ist die Unterseite des Motorgehäuses 40, d.h. die mit den Pfeilen 60 angedeutete Seitenfläche des Motorgehäuses 40, im Wesentlichen in einer horizontal orientierten Ebene angeordnet. Die Seitenfläche 60 des Motorgehäuses 40 ist somit zur Längsachse der Antriebswelle 44 bzw. zur Längsachse der nicht dargestellten Kurbelwelle des Motors 38 im Wesentlichen parallel angeordnet. Die Befestigungsstruktur 58 kann unmittelbar mit den beiden Rahmenelementen 14, 16 verbunden sein. Alternativ kann an der Befestigungsstruktur 58 ein Flansch ausgebildet sein, an welchem wiederum ein nicht dargestelltes weiteres Flanschteil starr befestigt ist. Dieses weitere Flanschteil kann an jeder Seite vorgesehen sein und jeweils mit dem Rahmenelement 14 bzw. 16 starr verbunden werden.

## Patentansprüche

1. Landwirtschaftliches oder industrielles Nutzfahrzeug mit einem Rahmen (12), einem Motor (38), und einer Vorrichtung zum Befestigen des Motors (38) an dem Rahmen (12), wobei der Rahmen (12) zwei voneinander beabstandet angeordnete Rahmenelemente (14, 16) aufweist, an denen weitere Komponenten des Nutzfahrzeugs anbaubar sind, beispielsweise ein Getriebe (22) und/oder eine Fahrzeugachse (34), **dadurch gekennzeichnet, dass** mindestens ein Bereich einer Seitenfläche (46) eines Motorgehäuses (40) derart ausgebildet ist, dass eine Befestigungsstruktur (48, 52, 54, 58) des Motors (38) gebildet wird und dass der Motor (38) mit lediglich dieser Befestigungsstruktur (48, 52, 54, 58) an den beiden Rahmenelementen (14, 16) befestigt ist.

2. Landwirtschaftliches oder industrielles Nutzfahrzeug nach Anspruch 1, **dadurch gekennzeichnet, dass** die Seitenfläche (46) des Motorgehäuses (40) das schwungradseitige Ende des Motors (38) oder das gegenüberliegende Ende (50) des Motors (38) ist.

3. Landwirtschaftliches oder industrielles Nutzfahrzeug nach Anspruch 1 oder 2, **dadurch gekennzeichnet, dass** die Seitenfläche (46) des Motorgehäuses (40) im Wesentlichen senkrecht zur Längsachse der Kurbelwelle des Motors (38) orientiert ist.

4. Landwirtschaftliches oder industrielles Nutzfahrzeug nach einem der Ansprüche 1 bis 3, **dadurch gekennzeichnet, dass** die Seitenfläche (60) des Motorgehäuses (40) eine zur Längsachse der Kurbelwelle im Wesentlichen parallel angeordnete Ebene ist, welche vorzugsweise horizontal oder vertikal orientiert ist.

5. Landwirtschaftliches oder industrielles Nutzfahrzeug nach einem der Ansprüche 1 bis 4, **dadurch gekennzeichnet, dass** die Befestigungsstruktur (48, 52, 54, 58) eine Gehäuseverstärkung aufweist, welche sich umfangsmäßig um das Motorgehäuse (40) erstreckt.

6. Landwirtschaftliches oder industrielles Nutzfahrzeug nach einem der Ansprüche 1 bis 5, **dadurch gekennzeichnet, dass** die Befestigungsstruktur (48, 52, 54, 58) derart ausgebildet ist, dass diese mit den Rahmenelementen (14, 16) eine Kragarmverbindung bildet.

7. Landwirtschaftliches oder industrielles Nutzfahrzeug nach einem der Ansprüche 1 bis 6, **dadurch gekennzeichnet, dass** der Motor (38) mittels der Befestigungsstruktur (48, 52, 54, 58) freitragend an dem Rahmen (12) aufgehängt ist.

8. Landwirtschaftliches oder industrielles Nutzfahrzeug nach einem der Ansprüche 1 bis 7, **dadurch gekennzeichnet, dass** die Befestigungsstruktur (48, 52, 54, 58) mindestens ein Flanschteil aufweist oder dass an der Befestigungsstruktur (48, 52, 54, 58) mindestens ein Flanschteil anbringbar ist, wobei das mindestens eine Flanschteil an einem Rahmenelement (14, 16) befestigt ist.

9. Landwirtschaftliches oder industrielles Nutzfahrzeug nach einem der Ansprüche 1 bis 8, **dadurch gekennzeichnet, dass** der Motor (42) mit der Befestigungsstruktur (48, 52, 54, 58) zwischen den beiden Rahmenelementen (14, 16) befestigt ist, sodass der Rahmen (12) des Nutzfahrzeugs zusätzlich versteift wird.

10. Landwirtschaftliches oder industrielles Nutzfahrzeug nach einem der Ansprüche 1 bis 9, **dadurch gekennzeichnet, dass** die Befestigungsstruktur (48, 52, 54, 58) derart an dem Rahmen (12) des Nutzfahrzeugs befestigt ist, dass keine äußeren, auf den Rahmen (12) des Nutzfahrzeugs wirkenden Kräfte, beispielsweise von einem an das Nutzfahrzeug anbringbaren Arbeitsgerät, in den Motor (38) eingeleitet werden.

11. Landwirtschaftliches oder industrielles Nutzfahrzeug nach einem der Ansprüche 1 bis 10, **dadurch gekennzeichnet, dass** die Befestigungsstruktur (48, 52, 54, 58) derart ausgebildet ist, dass mit dieser das Eigengewicht des Motors (38) und/oder das vom Motor (38) erzeugte Drehmoment am Rahmen (12) abstützbar ist.

12. Landwirtschaftliches oder industrielles Nutzfahrzeug nach einem der Ansprüche 1 bis 11, **dadurch gekennzeichnet, dass** ein Rahmenelement (14, 16) ein tragendes und ein im Wesentlichen länglich ausgebildetes Bauteil aufweist, welches bevorzugt parallel zur Fahrzeuglängsrichtung (18) angeordnet ist.

13. Landwirtschaftliches oder industrielles Nutzfahrzeug nach einem der Ansprüche 1 bis 12, **dadurch gekennzeichnet, dass** die Befestigungsstruktur (48, 52, 54, 58) oder ein mit der Befestigungsstruktur (48, 52, 54, 58) starr verbundenes Flanschteil starr an einem Rahmenelement (14, 16) befestigt ist.

14. Landwirtschaftliches oder industrielles Nutzfahrzeug nach einem der Ansprüche 1 bis 13, **dadurch gekennzeichnet, dass** die Befestigungsstruktur (48, 52, 54, 58) derart ausgebildet ist, dass Vibrationen und/oder Schwingungen des Motors (38) relativ zu den Rahmenelementen (14, 16) möglich und vorzugsweise dämpfbar sind.

15. Landwirtschaftliches oder industrielles Nutzfahrzeug nach einem der Ansprüche 1 bis 14, **dadurch gekennzeichnet, dass** die Befestigungsstruktur (48, 52, 54, 58) integral in dem oder an dem Motorgehäuse (40) ausgebildet ist.

## Claims

1. Agricultural or industrial utility vehicle having a frame (12), an engine (38) and a device for mounting the engine (38) on the frame (12), wherein the frame (12) has two frame elements (14, 16) which are arranged spaced apart from one another, to which further components of the utility vehicle, for example a gearbox (22) and/or a vehicle axle (34), can be attached, **characterized in that** at least one region of a side face (46) of the engine housing (40) is embodied in such a way that a mounting structure (48, 52, 54, 58) of the engine (38) is formed and that the engine (38) is mounted on the two frame elements (14, 16) using just this mounting structure (48, 52, 54, 58).

2. Agricultural or industrial utility vehicle according to Claim 1, **characterized in that** the side face (46) of the engine housing (40) is the flywheel-side end of the engine (38) or the opposite end (50) of the engine (38).

3. Agricultural or industrial utility vehicle according to Claim 1 or 2, **characterized in that** the side face (46) of the engine housing (40) is oriented essentially perpendicularly to the longitudinal axis of the crankshaft of the engine (38).

4. Agricultural or industrial utility vehicle according to one of Claims 1 to 3, **characterized in that** the side face (60) of the engine housing (40) is a plane which is arranged essentially parallel to the longitudinal axis of the crankshaft and which is preferably oriented horizontally or vertically.

5. Agricultural or industrial utility vehicle according to one of Claims 1 to 4, **characterized in that** the mounting structure (48, 52, 54, 58) has a housing reinforcement which extends around the circumference or periphery of the engine housing (40).

6. Agricultural or industrial utility vehicle according to one of Claims 1 to 5, **characterized in that** the mounting structure (48, 52, 54, 58) is designed to form a cantilever connection to the frame elements (14, 16).

7. Agricultural or industrial utility vehicle according to one of Claims 1 to 6, **characterized in that** the engine (38) is suspended from the frame (12) in a self-supporting fashion by means of the mounting structure (48, 52, 54, 58).

8. Agricultural or industrial utility vehicle according to one of Claims 1 to 7, **characterized in that** the mounting structure (48, 52, 54, 58) has at least one flange part, or **in that** at least one flange part can be attached to the mounting structure (48, 52, 54, 58), wherein the at least one flange part is mounted on a frame element (14, 16).

9. Agricultural or industrial utility vehicle according to one of Claims 1 to 8, **characterized in that** the engine (42) is mounted between the two frame elements (14, 16) using the mounting structure (48, 52, 54, 58), with the result that the frame (12) of the utility vehicle is additionally made more rigid.

10. Agricultural or industrial utility vehicle according to one of Claims 1 to 9, **characterized in that** the mounting structure (48, 52, 54, 58) is mounted on the frame (12) of the utility vehicle in such a way that no external forces which act on the frame (12) of the utility vehicle, for example from an implement which is attached to the utility vehicle, are applied to the engine (38).

11. Agricultural or industrial utility vehicle according to one of claims 1 to 10, **characterized in that** the mounting structure (48, 52, 54, 58) is embodied in such a way that it can be used to support the self weight of the engine (38), and/or the torque generated by the engine (38) on the frame (12).

12. Agricultural or industrial utility vehicle according to one of Claims 1 to 11, **characterized in that** a frame element (14, 16) has a load-bearing component which is of essentially elongate design and which is preferably arranged parallel to the longitudinal direction (18) of the vehicle.

13. Agricultural or industrial utility vehicle according to one of Claims 1 to 12, **characterized in that** the mounting structure (48, 52, 54, 58) or a flange part which is rigidly connected to the mounting structure (48, 52, 54, 58) is rigidly mounted on a frame element (14, 16).

14. Agricultural or industrial utility vehicle according to one of Claims 1 to 13, **characterized in that** the mounting structure (48, 52, 54, 58) is embodied in such a way that vibrations and/or oscillations of the engine (38) relative to the frame elements (14, 16) are possible and can preferably be damped.

15. Agricultural or industrial utility vehicle according to one of Claims 1 to 14, **characterized in that** the mounting structure (48, 52, 54, 58) is formed integrally in or on the engine housing (40).

## Revendications

1. Véhicule utilitaire agricole ou industriel comprenant un châssis (12), un moteur (38) et un dispositif pour fixer le moteur (38) sur le châssis (12), le châssis (12) présentant deux éléments de châssis (14, 16) espacés l'un de l'autre, sur lesquels peuvent être rapportés d'autres composants du véhicule utilitaire, par exemple une boîte de vitesses (22) et/ou un essieu de véhicule (34), **caractérisé en ce qu'**au moins une région d'une surface latérale (46) d'un boîtier de moteur (40) est réalisée de telle sorte qu'une structure de fixation (48, 52, 54, 58) du moteur (38) soit formée et que le moteur (38) soit fixé avec seulement cette structure de fixation (48, 52, 54, 58) aux deux éléments de châssis (14, 16).

2. Véhicule utilitaire agricole ou industriel selon la revendication 1, **caractérisé en ce que** la surface latérale (46) du boîtier de moteur (40) est l'extrémité du moteur (38) du côté du volant d'inertie ou l'extrémité opposée (50) du moteur (38).

3. Véhicule utilitaire agricole ou industriel selon la revendication 1 ou 2, **caractérisé en ce que** la surface latérale (46) du boîtier de moteur (40) est orientée essentiellement perpendiculairement à l'axe longitudinal du vilebrequin du moteur (38).

4. Véhicule utilitaire agricole ou industriel selon l'une quelconque des revendications 1 à 3, **caractérisé en ce que** la surface latérale (60) du boîtier de moteur (40) est un plan disposé essentiellement parallèlement à l'axe longitudinal du vilebrequin, lequel plan est orienté de préférence horizontalement ou verticalement.

5. Véhicule utilitaire agricole ou industriel selon l'une quelconque des revendications 1 à 4, **caractérisé en ce que** la structure de fixation (48, 52, 54, 58) présente un renforcement du boîtier qui s'étend circonférentiellement autour du boîtier de moteur (40).

6. Véhicule utilitaire agricole ou industriel selon l'une quelconque des revendications 1 à 5, **caractérisé en ce que** la structure de fixation (48, 52, 54, 58) est réalisée de telle sorte qu'elle forme avec les éléments de châssis (14, 16) une liaison par bras en porte-à-faux.

7. Véhicule utilitaire agricole ou industriel selon l'une quelconque des revendications 1 à 6, **caractérisé en ce que** le moteur (38) est suspendu au châssis (12) de manière indépendante au moyen de la structure de fixation (48, 52, 54, 58).

8. Véhicule utilitaire agricole ou industriel selon l'une quelconque des revendications 1 à 7, **caractérisé en ce que** la structure de fixation (48, 52, 54, 58) présente au moins une partie de bride ou **en ce qu'**au moins une partie de bride peut être montée sur la structure de fixation (48, 52, 54, 58), l'au moins une partie de bride étant fixée à un élément de châssis (14, 16).

9. Véhicule utilitaire agricole ou industriel selon l'une quelconque des revendications 1 à 8, **caractérisé en ce que** le moteur (42) est fixé avec la structure de fixation (48, 52, 54, 58) entre les deux éléments de châssis (14, 16), de telle sorte que le châssis (12) du véhicule utilitaire soit davantage renforcé.

10. Véhicule utilitaire agricole ou industriel selon l'une quelconque des revendications 1 à 9, **caractérisé en ce que** la structure de fixation (48, 52, 54, 58) est fixée au châssis (12) du véhicule utilitaire de telle sorte qu'aucune force extérieure agissant sur le châssis (12) du véhicule utilitaire, par exemple provenant d'un engin de travail pouvant être monté sur le véhicule utilitaire, ne soit introduite dans le moteur (38).

11. Véhicule utilitaire agricole ou industriel selon l'une quelconque des revendications 1 à 10, **caractérisé en ce que** la structure de fixation (48, 52, 54, 58) est réalisée de telle sorte que le poids propre du moteur (38) et/ou que le couple produit sur le châssis (12) par le moteur (38) puissent être supportés par celle-ci.

12. Véhicule utilitaire agricole ou industriel selon l'une quelconque des revendications 1 à 11, **caractérisé en ce qu'**un élément de châssis (14, 16) présente un composant porteur et un composant réalisé essentiellement sous forme allongée, qui est disposé de préférence parallèlement à la direction longitudinale du véhicule (18).

13. Véhicule utilitaire agricole ou industriel selon l'une quelconque des revendications 1 à 12, **caractérisé en ce que** la structure de fixation (48, 52, 54, 58) ou une partie de bride connectée rigidement à la structure de fixation (48, 52, 54, 58) est fixée rigidement à un élément de châssis (14, 16).

14. Véhicule utilitaire agricole ou industriel selon l'une quelconque des revendications 1 à 13, **caractérisé en ce que** la structure de fixation (48, 52, 54, 58) est réalisée de telle sorte que les vibrations et/ou les oscillations du moteur (38) puissent être éventuellement et de préférence amorties par rapport aux éléments de châssis (14, 16).

15. Véhicule utilitaire agricole ou industriel selon l'une quelconque des revendications 1 à 14, **caractérisé en ce que** la structure de fixation (48, 52, 54, 58) est réalisée sous forme intégrale dans le ou sur le boîtier de moteur (40).
